# FASCICULE DE BREVET EUROPEEN

(11) **EP 1 647 723 B1**
(45) Date de publication et mention de la délivrance du brevet: **25.06.2008**
(21) Numéro de dépôt: 05292087.3
(22) Date de dépôt: 07.10.2005
(51) Int. Cl.: F16B 17/00, A47B 91/06

(54) **Embout de tube, notamment des montants d'échelle ou de marchepied et procédé de montage**
Rohrendstück, insbesondere für Leiter- oder Trittleiterholmen, und Montageverfahren
Tube end piece, especially for stiles of a ladder or a step, and mounting process

(30) Priorité: 18.10.2004 FR 0411000
(43) Date de publication de la demande: 19.04.2006
(73) Titulaire: Tubesca, 93135 Noisy-le-Sec (FR)
(72) Inventeur: Manier, Francis, 80680 Sains-en-Amienois (FR)
(74) Mandataire: Doressamy, Clarisse

(56) Documents cités:
- FR-A- 821 682
- US-A- 1 496 580
- US-A- 1 570 576
- US-A- 1 852 751

## Description

L'invention concerne un ensemble d'un embout et d'une extrémité de tube, notamment de montant d'échelle ou de marchepied, et son procédé de montage.

On sait que les embouts de montant d'échelle, notamment ceux montés fixés par vis ou rivets sur les montants, sont sujets à des risques de démontage à l'usage et surtout en raison des vibrations de portage sur les galeries des véhicules, et donc sont sujets à un risque de perte, ce qui peut compromettre l'usage des échelles correspondantes et la sécurité de leur utilisation.

On connaît par US-A-1496580 un ensemble comprenant un embout et une extrémité de tube selon le préambule de la revendication 1. La déformation du tube est effectuée vers l'intérieur du tube et est difficile à réaliser.

L'invention vise à obtenir un embout de tube qui soit facile à monter et qui soit indémontable à l'usage et donc « imperdable ».

Il est en effet proposé selon l'invention un ensemble d'un embout et d'une extrémité de tube métallique, conforme à la revendication 1.

La déformation ou repliage latéral externe de la partie d'extrémité du tube au droit du trou peut être issu d'emboutissage.

Avantageusement, ladite partie d'extrémité du tube est légèrement coupée sensiblement à la largeur du trou pour permettre ledit repliage latéral.

Ladite partie de métal repoussée ou repliée latéralement vers le dégagement du trou peut avoir la forme d'une languette, sensiblement de la largeur du trou et de l'épaisseur du tube, cette languette étant repliée, par exemple à angle droit du tube ou à un angle moindre.

La largeur de la languette pour les tubes de montants d'échelle ou de marchepied usuels est de plusieurs millimètres environ, par exemple de 2 à 10 mm.

De préférence, l'embout comporte deux trous opposés, formés par exemple sur chacun des côtés de largeur, sur un plan médian de l'embout ou proche, en sorte que la prise de l'embout avec les deux languettes repliées du tube soit très rigide et sans déboîtement possible sur un côté.

Il résulte de cette disposition que les languettes repliées latéralement à force sur les dégagements des trous constituent des éléments d'arrêt bloquants de la position emmanchée de l'embout sur le tube, qui sont pratiquement indéformables et ne sont pas sujets au dévissage et à la prise de jeu comme les vis et les rivets de fixation des embouts classiques.

Ces languettes constituent en outre des témoins visuels de sécurité pour l'utilisateur du bon emmanchement, à fond, de l'embout sur le tube.

L'invention concerne également un procédé de montage d'un ensemble comprenant un embout et une extrémité d'un tube, caractérisé en ce qu'il comporte les étapes suivantes :
- on emmanche l'embout sur le tube jusqu'à venir à fond de course, l'extrémité de tube étant alors en appui sur le fond de l'embout ;
- on introduit depuis l'extérieur de l'embout un outil de déformation du métal, par exemple de découpe et de pliage, dans le trou dudit embout emmanché sur le tube, ledit outil étant à forme générale de coin, éventuellement avec deux petites arêtes latérales de découpe, et de dimensions légèrement moindres que celles du trou, et
- on applique à force, par exemple au moyen d'une presse, ledit outil dans le trou à l'encontre de l'extrémité du tube, de manière à repousser latéralement vers l'extérieur ladite partie du tube en vis à vis contre le dégagement latéral du trou pour emprisonner l'embout au tube.

Avantageusement, on forme à l'aide desdites deux arêtes de l'outil deux petites découpes latérales sur la partie d'extrémité du tube en vis-à-vis du trou, pour faciliter le repliage de celle-ci par l'outil comme une languette.

L'invention est illustrée ci-après à l'aide d'un exemple de réalisation et en référence aux dessins annexés, sur lesquels ;
- la figure 1 est une vue en perspective éclatée d'un embout d'un ensemble selon l'invention et de l'extrémité d'un montant tubulaire d'échelle le recevant,
- la figure 2 est une vue analogue à la précédente de l'embout monté sur le montant d'échelle, et
- la figure 3 montre l'introduction de l'outil de découpe et repliage du métal dans le trou de l'embout.

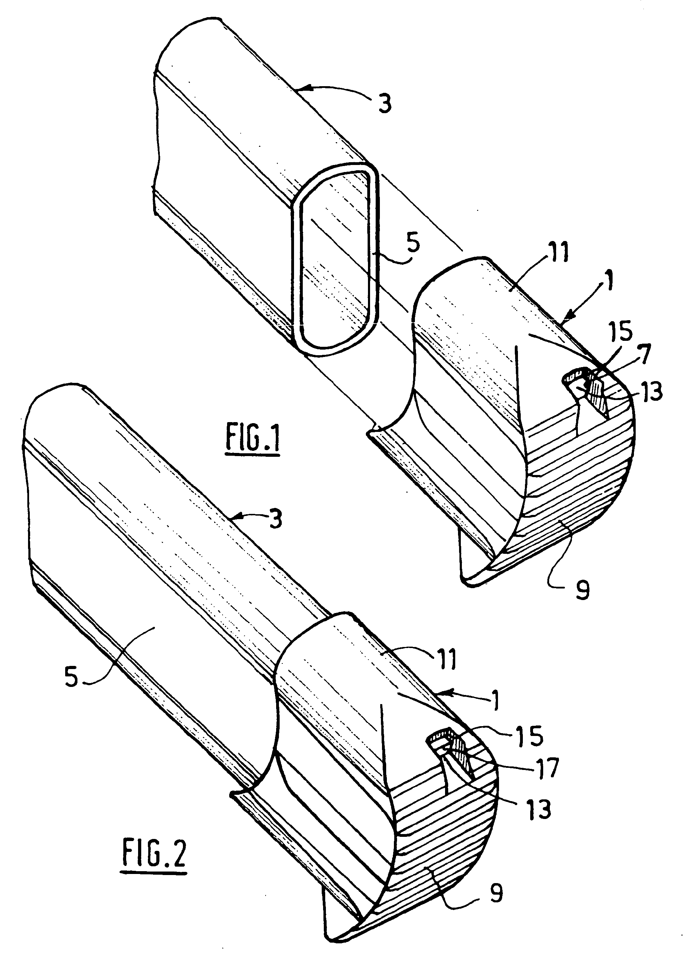

Avec référence au dessin et en particulier aux figures 1 et 2, on a représenté un embout de tube 1 selon l'invention, destiné à être monté sur un montant tubulaire métallique d'échelle 3. Ce dernier est un profilé métallique, de préférence en aluminium, et de section oblongue régulière. Il comporte une partie d'extrémité à découpe droite 5 à sa partie inférieure. Sur cette partie inférieure est monté ledit embout 1, lequel joue ici le rôle de sabot de montant d'échelle.

Cet embout est issu de moulage en matière synthétique, matière plastique notamment. Il est de type enveloppant, étant monté par emmanchement sur la partie d'extrémité du montant 3. Il comporte ainsi un évidement interne de section complémentaire de celle du montant au jeu près, et un fond 7 sur lequel vient en butée l'extrémité 5 du montant à l'emmanchement. Il comporte en outre une semelle inférieure rainurée 9 destinée à reposer sur le sol et une jupe supérieure 11 s'étendant à faible hauteur, de 3 à 5 cm, contre la paroi du montant au montage.

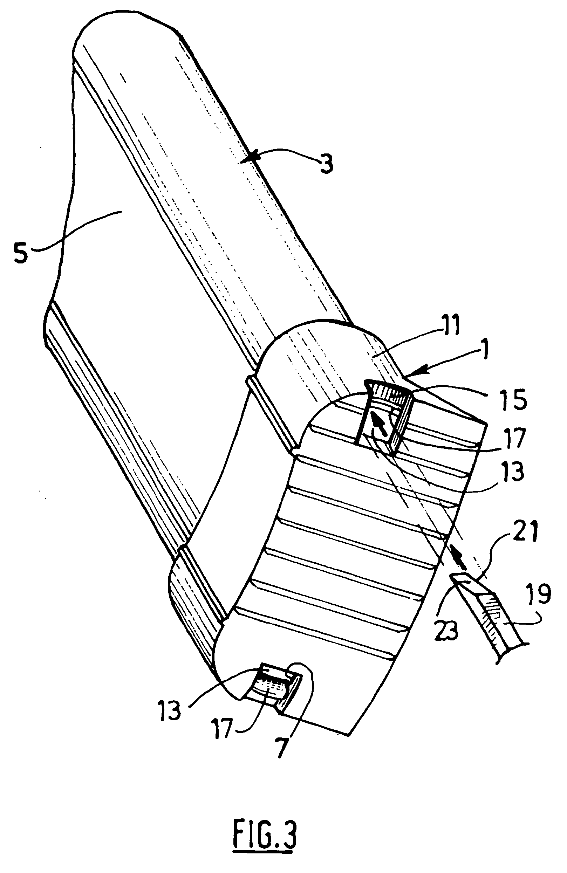

Deux trous latéraux 13, opposés l'un à l'autre, sont formés sur chacun des côtés de largeur de la semelle 9, à proximité de la partie médiane du sabot et sur un même plan parallèle aux côtés de longueur de l'embout. Ces trous 13 sont formés avec un dégagement latéral externe 15 sur la jupe 11, légèrement au dessus du fond 7 de l'embout. Ce faisant et comme on le voit à la figure 3, ces trous 13 laissent paraître, après emmanchement de l'embout au tube, une partie découverte 17 d'extrémité du tube de montant en vis-à-vis. C'est cette partie de métal 17 qui est déformée latéralement, repoussée contre le dégagement 15 du trou et qui permet de solidariser l'embout au tube, comme on le voit sur la figure 2 montrant l'embout après montage.

Le montage est à présent décrit. Celui-ci est simple et rapide.

Il s'agit d'abord d'emmancher l'embout 1 sur le tube 3, à fond de course, en sorte que l'extrémité du tube 5 repose contre le fond 7 de l'embout.

On engage ensuite depuis l'extérieur de l'embout et de bas en haut selon flèche (fig. 3) un outil 19 à forme de coin dans chacun des trous 13 de l'embout. Cet outil 19 est profilé pour rentrer dans le trou 13, étant de dimensions sensiblement inférieures à celles du trou 13 en section. Il comporte deux arêtes latérales 21 et une partie en coin 23 à son extrémité. Lors de l'introduction à force de l'outil dans le trou, celui-ci vient contre la partie de métal découverte 17 et les arêtes 21 découpent de chaque côté de cette partie une petite longueur de métal et le mouvement subséquent vers l'intérieur de la partie en coin 23 repousse la partie découpée vers l'extérieur latéralement contre le dégagement 15 du trou. L'embout est ainsi retenu solidairement au tube, d'une part par son fond en appui contre le tube et d'autre part par la partie de métal repoussée (à forme de languette) en appui contre le dégagement 15, retenant l'embout dans l'autre sens.

La même opération est faite pour le second trou 13 en sorte que l'embout soit retenu au tube de l'autre côté, également (symétriquement sur deux côtés opposés).

L'embout est alors monté sur le tube de montant d'échelle, comme représenté à la figure 2. Le montage est avantageusement effectué mécaniquement, sur machine, le processus étant assuré de façon automatique, continue et contrôlée, de l'emmanchement de l'embout sur le tube jusqu'au repoussement latéral de matière du tube sur chaque dégagement de trou. Il ne nécessite aucun élément rapporté, tel que vis ou rivet pour sa fixation.

## Revendications

1. Ensemble comprenant :
- l'extrémité d'un tube métallique (3), notamment de montant d'échelle ou de marchepied, et
- un embout de tube métallique (1), de type enveloppant avec un évidement interne complémentaire au jeu d'emmanchement près la partie d'extrémité du tube (3) qui le reçoit, et comportant au moins un trou (13) formé sensiblement au niveau de la périphérie de son fond (7) recevant l'extrémité du tube (5) à l'emmanchement, ledit trou (13) ayant un dégagement latéral (15) disposé légèrement en deçà du fond ou de l'extrémité (5) du tube emmanché, la partie d'extrémité de tube (17) située au droit du trou (13) étant déformée relativement au dégagement latéral (15) du trou pour y venir en prise de manière à verrouiller l'embout (1) emmanché solidairement au tube (3), **caractérisé en ce que** cette partie d'extrémité de tube (17) est déformée vers l'extérieur du tube.

2. Ensemble selon la revendication 1, **caractérisé en ce que** ladite partie de tube (17) est légèrement coupée, sensiblement à la largeur du trou, et est repliée latéralement contre le dégagement (15).

3. Ensemble selon la revendication 2, **caractérisé en ce que** ladite partie de métal (17) repliée latéralement sur le dégagement (15) du trou a la forme d'une languette, sensiblement de la largeur du trou (13) et de l'épaisseur du tube (3), cette languette (17) étant repliée, par exemple à angle droit du tube ou à un angle moindre.

4. Ensemble selon la revendication 3, **caractérisé en ce que** la largeur de la languette (17) pour les tubes (3) de montants d'échelle ou de marchepied usuels est comprise entre 2 et 10 mm.

5. Ensemble selon l'une des revendications précédentes, **caractérisé en ce que** l'embout (1) comporte deux trous opposés (13), formés par exemple sur chacun de ses côtés de largeur et disposés sur un plan médian de l'embout ou proche, en sorte que la prise de l'embout avec les deux languettes (17) repliées du tube soit très rigide et sans déboîtement possible sur un côté.

6. Ensemble selon l'une des revendications 3-5, **caractérisé en ce que** lesdites languettes (17) constituent en outre des témoins visuels de sécurité pour l'utilisateur du bon emmanchement, à fond, de l'embout (1) sur le tube (3).

7. Procédé de montage d'un ensemble tel que défini selon l'une des revendications précédentes, **caractérisé en ce qu'**il comporte les étapes suivantes :
- on emmanche l'embout (1) sur le tube (3) jusqu'à venir à fond de course, l'extrémité de tube (3) étant alors en appui sur le fond (7) de l'embout ;
- on introduit depuis l'extérieur de l'embout (1) un outil de déformation du métal (19) dans le trou (13) dudit embout (1) emmanché sur le tube (3), ledit outil (19) étant à forme générale de coin de dimensions légèrement moindres que celles du trou (13), et
- on applique à force, par exemple au moyen d'une presse, ledit outil (19) dans le trou (13) à l'encontre de l'extrémité du tube (3), de manière à repousser latéralement vers l'extérieur ladite partie du tube (17) en vis-à-vis contre le dégagement latéral (15) du trou pour emprisonner l'embout (1) au tube (3).

8. Procédé de montage d'un ensemble selon la revendication 7, **caractérisé en ce que** ledit outil (19) comporte deux petites arêtes latérales (21) de découpe de la partie de tube (17), de manière à réaliser à l'aide desdites arêtes (21) deux petites découpes latérales sur la partie d'extrémité du tube (17) facilitant son repliage comme une languette.

## Claims

1. An assembly comprising:
- the end of a metal tube (3), in particular of an upright of a ladder or pair of steps, and
- an end cap (1) for a metal tube, of the type encompassing, with an internal cavity which is complementary apart from fitting play, the end part of the tube (3) which receives it, and comprising at least one hole (13) formed substantially at the level of the periphery of the bottom (7) thereof receiving the end of the tube (5) on fitting, said hole (13) having a lateral undercut (15) arranged slightly above the bottom or end (5) of the fitted tube, the tube end part (17) situated opposite the hole (13) being deformed relative to the lateral undercut (15) of the hole so as to come into engagement therewith in such a way as to lock the end cap (1) fitted firmly to the tube (3), **characterised in that** said tube end part (17) is deformed towards the outside of the tube.

2. An assembly according to claim 1, **characterised in that** said tube part (17) is cut slightly, substantially over the width of the hole, and is folded laterally against the undercut (15).

3. An assembly.according to claim 2, **characterised in that** said metal part (17) folded laterally against the undercut (15) of the hole has the shape of a tongue, substantially of the width of the hole (13) and of the thickness of the tube (3), said tongue (17) being folded, for example at a right angle to the tube or at a smaller angle.

4. An assembly according to claim 3, **characterised in that** the width of the tongue (17) for the tubes (3) of conventional uprights of ladders or pairs of steps is between 2 and 10 mm.

5. An assembly according to one of the preceding claims, **characterised in that** the end cap (1) comprises two opposing holes (13), formed for example on each of the widthwise sides thereof and disposed in or close to a median plane of the end cap, in such a manner that the engagement of the end cap with the two folded tongues (17) of the tube is very rigid and unable to come apart on one side.

6. An assembly according to one of claims 3-5, **characterised in that** said tongues (17) additionally constitute visual security markers showing the user that the end cap (1) is properly and fully fitted on the tube (3) .

7. A process for assembling an assembly as defined according to one of the preceding claims, **characterised in that** it comprises the following stages:
- the end cap (1) is fitted on the tube (3) as far as it will go, the end of the tube (3) then resting against the bottom (7) of the end cap;
- a tool for deforming the metal (18) is introduced from the outside of the end cap (1) into the hole (13) of said end cap (1) fitted on the tube (3), said tool (19) taking the general form of a wedge with dimensions slightly smaller than those of the hole (13), and
- said tool (19) is applied in the hole (13) by force, for example by means of a press, against the end of the tube (3), in such a way as to drive sideways towards the outside said facing part (17) of the tube against the lateral undercut (15) of the hole so as to trap the end cap (1) on the tube (3).

8. A process for assembling an assembly according to claim 7, **characterised in that** said tool (19) comprises two small lateral edges (21) for cutting the tube part (17), in such a way as to produce by means of said edges (21) two small lateral cuts in the end part of the tube (17) facilitating folding thereof like a tongue.

## Patentansprüche

1. Gesamtheit, enthaltend:
ein Ende eines Metallrohrs (3), insbesondere eines Pfostens einer Sprossenleiter oder einer Stufenleiter, und
ein Metallrohrendstück (1) des Typs, der mit einer inneren Ausnehmung, die komplementär ist zu dem Spiel des Einsteckendes, den Endabschnitt des Rohrs (3), das es aufnimmt, nahe umhüllt und zumindest ein Loch (13) aufweist, das im Wesentlichen auf dem Niveau des Randes seines Bodens (7) gebildet ist, der das Rohrende (5) an seinem Einsteckende aufnimmt, wobei das Loch (13) eine seitliche Aussparung (15) aufweist, die leicht unter dem Boden oder dem eingesteckten Rohrende (5) angeordnet ist,
wobei der Abschnitt (17) des Rohrendes, der gerade an dem Loch (13) sitzt, relativ zu der seitlichen Aussparung (15) des Lochs verformt wird, um dort so einzugreifen, dass das aufgesteckte Endstück (1) fest mit dem Rohr (3) verriegelt wird,
**dadurch gekennzeichnet, dass**
dieser Abschnitt (17) des Rohrendes zum Äußeren des Rohrs hin verformt ist.

2. Gesamtheit nach Anspruch 1, **dadurch gekennzeichnet, dass** der Rohrabschnitt (17) leicht eingeschnitten ist, im Wesentlichen in der Breite des Loches, und seitlich zu der Ausnehmung (15) hin gefaltet ist.

3. Gesamtheit nach Anspruch 2, **dadurch gekennzeichnet, dass** der Metallabschnitt (17), der seitlich zu der Ausnehmung (15) des Lochs hin gefaltet ist, die Form einer Zunge hat, im Wesentlichen mit der Breite des Lochs (13) und der Dicke des Rohrs (3),
wobei diese Zunge (17) beispielsweise im rechten Winkel oder in einem geringeren Winkel gegenüber dem Rohr gefaltet ist.

4. Gesamtheit nach Anspruch 3, **dadurch gekennzeichnet, dass** die Breite der Zunge (17) für gewöhnliche Rohre (3) der Pfosten einer Sprossenleiter oder einer Stufenleiter zwischen 2 und 10 mm liegt.

5. Gesamtheit nach einem der vorigen Ansprüche, **dadurch gekennzeichnet, dass** das Endstück (1) zwei gegenüberliegende Löcher (13) aufweist, die beispielsweise auf jeder seiner Seiten der Breite angeordnet sind und in einer Mittelebene des Endstücks oder in der Nähe liegen, so dass das Eingreifen des Endstücks mit den zwei gefalteten Zungen (17) des Rohrs sehr steif und ohne ein mögliches Ausscheren auf einer Seite ist.

6. Gesamtheit nach einem der Ansprüche 3-5, **dadurch gekennzeichnet, dass** die Zungen (17) weiter für den Benutzer auf dem Boden sichtbare Zeugnisse des guten Einsteckens des Endstücks (1) auf das Rohr (3) sind.

7. Verfahren zum Montieren einer Gesamtheit, wie sie in einem der vorigen Ansprüche definiert ist, **dadurch gekennzeichnet, dass** es die folgenden Schritte aufweist:
Aufstecken des Endstücks (1) auf das Rohr (3) bis zum Erreichen des Bodens des Laufs, wobei das Ende des Rohrs (3) dann an dem Boden (7) des Endstücks anliegt,
Einführen eines Werkzeugs (19) zur Metallverformung von dem Äußeren des Endstücks (1) her in das Loch (13) des auf das Rohr (3) aufgesteckten Endstücks (1), wobei das Werkzeug (19) allgemein die Form eines Keils mit wenig kleineren Abmessungen als denjenigen des Lochs (13) hat,
Anlegen des Werkzeugs (19) in dem Loch (13) mit Kraft, beispielsweise mittels einer Presse, gegen das Ende des Rohrs (3), so dass der Rohrabschnitt (17), der der seitlichen Ausnehmung (15) des Lochs gegenüberliegt, seitlich nach außen geschoben wird, um das Endstück (1) an dem Rohr (3) festzusetzen.

8. Verfahren zum Montieren einer Gesamtheit nach Anspruch 7, **dadurch gekennzeichnet, dass** das Werkzeug (19) zwei kleine seitliche Kanten (21) zum Ausschneiden des Rohrabschnitts (17) aufweist, so dass mittels dieser Kanten (21) zwei kleine seitliche Schnitte an dem Rohrendabschnitt (17) gebildet werden, die sein Falten wie eine Zunge erleichtern.
